Europäisches Patentamt

European Patent Office

Office européen des brevets

(19)

(11) Numéro de publication: **0 087 348**

**B1**

(12) **FASCICULE DE BREVET EUROPEEN**

(45) Date de publication du fascicule du brevet: **30.04.86**

(51) Int. Cl.⁴: **H 02 G 5/06**

(21) Numéro de dépôt: **83400276.8**

(22) Date de dépôt: **08.02.83**

(54) Installation blindée haute tension subdivisée en compartiments étanches.

(30) Priorité: **19.02.82 FR 8202910**

(43) Date de publication de la demande:
**31.08.83 Bulletin 83/35**

(45) Mention de la délivrance du brevet:
**30.04.86 Bulletin 86/18**

(84) Etats contractants désignés:
**BE CH DE GB IT LI NL SE**

(56) Documents cités:
**FR-A-2 006 297**
**US-A-4 024 339**

(73) Titulaire: **MERLIN GERIN**
**Rue Henri Tarze**
**F-38050 Grenoble Cedex (FR)**

(72) Inventeur: **Giboulet, André**
**Merlin Gerin**
**F-38050 Grenoble Cedex (FR)**
Inventeur: **Henry, Georges**
**Merlin Gerin**
**F-38050 Grenoble Cedex (FR)**
Inventeur: **Kieffer, Jean**
**Merlin Gerin**
**F-38050 Grenoble Cedex (FR)**

(74) Mandataire: **Kern, Paul et al**
**Merlin Gerin Sce. Brevets 20, rue Henri Tarze**
**F-38050 Grenoble Cedex (FR)**

EP 0 087 348 B1

Courier Press, Leamington Spa, England.

## Description

L'invention est relative à une installation blindée selon le préambule de la revendication 1.

Dans une installation blindée du genre mentionné, un défaut, par exemple d'étanchéité, peut être circonscrit à un compartiment donné, la partie restante de l'installation n'étant pas affectée. La présence de brides de raccordement permet un démontage de l'installation et une révision ou réparation de certaines parties de l'installation. Le document US—A—4024339 décrit un raccord à brides, dans lequel l'isolateur de support intercalé entr les brides est rigidement assujetti à l'une des brides par des vis. L'autre bride peut ainsi être démontée en mettant uniquement le compartiment du côté de cette bride au contact de l'atmosphère. Si l'incident s'est produit dans l'autre compartiment, le raccord doit être entièrement démonté et les deux compartiments adjacents sont obligatoirement mis à l'atmosphère. Avant toute remise en service, les deux compartiments doivent être nettoyés et remplis de gaz isolant même si l'intervention s'est limitée à l'un des compartiments. Il en résulte un surcroît de travail et une complication de l'opération de révision ou de réparation. La double fixation de la bordure complique le raccord.

Un autre raccord connu (FR—A—2006297) fait usage d'un isolateur composite ayant une bordure externe métallique intercalée entre les deux brides. L'anneau est fixé aux deux brides par des vis indépendantes. La réalisation de l'isolateur composite est compliquée et la zone de jonction entre l'isolant et le métal est une zone de fuites et de rupture.

La présente invention a pour but de permettre la réalisation d'un raccord simple, qui autorise la vidange et le démontage de l'un des compartiments de l'installation en maintenant les compartiments adjacents étanches sous la pression normale de fonctionnement.

Ce but est atteint par la mise en oeuvre des caractéristiques mentionnées dans le partie caractérisante de le revendication 1.

Lors d'un démontage on enlève un premier boulon de raccordement et on glisse dans l'évidement correspondant du côté de la bride devant être démontée une plaquette écrou recevant une vis de fixation de la bride opposée, de manière à solidariser la bordure externe de l'isolateur à la bride du tronçon non démonté. Successivement chaque boulon est remplacé d'une manière analogue par une vis et l'écrou plaquette précités, le démontage s'effectuant bien entendu d'une manière symétrique pour éviter des contraintes excessives sur l'isolateur. Après remplacement de l'ensemble des boulons l'isolateur est rigidement solidarisé à la bride du tronçon intact et sans rupture de l'étanchéité de ce tronçon. La fixation est suffisamment solide pour résister à la pression différentielle s'exeçant sur l'isolateur lors de la mise à l'atmosphère du tronçon défectueux.

Il est avantageux de ménager des évidements sur les deux interfaces de la paire de brides pour permettre une fixation de l'isolateur à l'une quelconque des brides et de ce fait un démontage de l'un quelconque des tronçons raccordés. Les évidements peuvent être ménagés dans la bordure de l'isolateur et venir de moulage de ce dernier ou selon une variante de réalisation être usinés dans la face de contact des brides.

La forme des évidements et des plaquettes écrou est avantageusement en demi-lune entourant le boulon, de manière à répartir les forces de serrage et à limiter les contraintes exercées sur la bordure de l'isolateur. La surface affectée par les évidements n'est qu'une fraction de la surface des bordures de l'isolateur au contact des brides, de manière à éviter toute déformation de l'isolateur et à garantir le maintien de l'étanchéité.

Il est avantageux de prévour un évidement au droit de chaque boulon, mais le nombre des évidements peut être limité si la rigidité de fixation et les contraintes imposées à l'isolateur sont faibles.

D'autres avantages et caractéristiques de l'invention ressortiront plus clairement de la description qui va suivre d'un mode de mise en oeuvre de l'invention, donné à titre d'exemple non limitatif et représenté au dessin annexé, dans lequel:

la figure 1 est une vue schématique en coupe axiale d'une barre de connexion blindée;

la figure 2 est une vue de côté, à échelle agrandie, de l'isolateur support selon la figure 1;

la figure 3 est une vue partielle, à échelle agrandie, de la bride de raccordement de la figure 1, montrée en position assemblée;

la figure 4 est une vue analogue à celle de la figure 3, montrant l'isolateur de support raccordé à une seule des brides de raccordement.

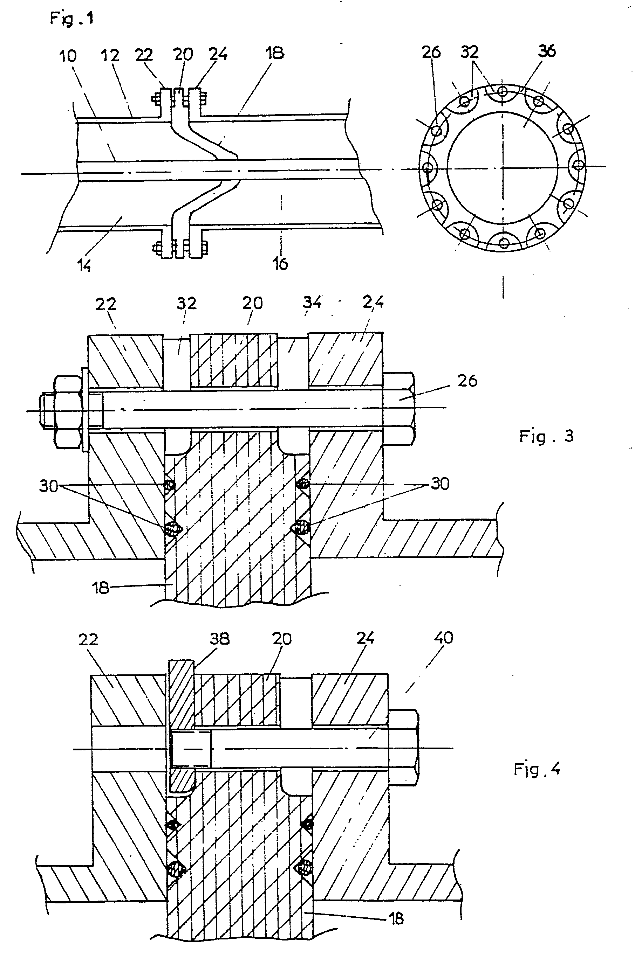

Sur la figure 1, une installation blindée, en l'occurrence une barre conductrice 10, est disposée concentriquement à l'intérieur d'une gaine ou enveloppe 12 métallique mise à la terre. La gaine 12 contient un gaz isolant à rigidité diélectrique élevée, notament de l'hexafluorure de soufre sous pression, et l'intérieur de la gaine est subdivisé en plusieurs compartiments 14, 16 par des cloisons d'étanchéité constituées par des isolateurs 18 de support du conducteur 10. Les isolateurs 18 de forme conique comportent une bordure externe de forme annulaire 20 insérée entre deux brides 22, 24 d'une paire de brides de raccordement de deux tronçons de gaine successifs. Des boulons 26 de serrage sont répartis circonférentiellement pour serrer les brides 22, 24 au contact de la bordure 20, l'étanchéité étant assurée par des joints toriques 30.

En se référant plus particulièrement aux figures 3 et 4, on voit que des évidements 32, 34 sont ménagés dans la bordure 20 au droit du boulon 26 respectivement dans les zones périphériques au contact de la bride 22 et de la bride 24. L'épaisseur de chaque évidement 32, 34 est faible par rapport à l'épaisseur de la bordure 20, interposée entre les brides 22, 24 et cet évidement 32, 34 ne s'étend que sur le pourtour externe de la bordure 20 sur une hauteur qui est une fraction de la hauteur de la bordure 20, interposée entre les brides 22, 24. En ce référant à la figure 2, on voit que chaque évidement est en forme de demi-lune disposée autour du boulon 26, les demi-lunes 32 n'étant pas jointives pour laisser subsister des parties pleines 36 de bordure formant cale d'écartement des brides 22, 24. Chaque évidement 32, 34 est susceptible de recevoir, après enlèvement du boulon 26, une plaquette 38 de forme conjuguée en demi-lune dont l'épaisseur est légèrement inférieure à celle de l'évidement pour faciliter la mise en place. La plaquette 38 présente un orifice taraudé dans lequel peut être visséeune vis 40 remplaçant le boulon 26. Il est facile de voir qu'une plaquette écrou 38, insérée dans l'évidement 32, permet une fixation de la bordure 20 et de ce fait de l'isolateur 18 à la bride 24 par la vis 40. Inversement la bride 22 est libérée par l'enlèvement du boulon 26 pour permettre un démontage.

L'invention est mise en oeuvre de la manière suivante:

En fonctionnement normal, les tronçons de gaine sont solidarisés par les boulons 26 d'une manière étanche, la présence des évidements 32, 34 n'affectant pas la solidité de cet assemblage. Le cas échéant, les rondelles de forme appropriée peuvent être insérées dans les évidements 32, 34 pour limiter tout risque de déformation. Dans le cas d'un démontage, par exemple du compartiment 14 pour une intervention ou une révision des éléments logés dans ce compartiment, on enlève un par un les boulons 26, qui sont remplacés successivement par des plaquettes écrou 38, insérées dans les logements 32 adjacents à la bride 22 à démonter. Des vis 40 de fixation de la bride 24 du compartiment 16 intact se vissent dans les plaquettes écrou 38. Après remplacement de l'ensemble des boulons 26 par les vis 40—écrous 38, la bordure 20 est solidarisée à la bride 24, la bride 22 étant par contre libre. Il est alors possible d'enlever la gaine 12 du tronçon correspondant. L'étanchéité du compartiment 16 est conservée par la fixation de l'isolateur 18 à la bride 24, et cette fixation réalisée par les vis 40 est suffisamment solide pour résister à la pression régnant dans le compartiment 16 avec le coefficient de sécurité idoine. Le cas échéant, on peut envisager une réduction temporaire de la pression dans le compartiment 16 qui bien antendu sera remis sous pression en même temps que le compartiment 14 après la réparation et avant la mise en fonctionnement de l'installation. Le remontage s'effectue d'une manière inverse par remplacement successif des vis 40 par des boulons de liaison 26.

Le dispositif de fixation selon l'invention ne nécessite aucun insert dans l'isolateur 18 susceptible d'imposer une contrainte à la fabrication ou à l'usage. La forme des plaquettes écrou 38 peut bien entendu être differente et l'évidement 32, 34 n'est pas obligatoirement situé à proximité de l'interface isolateur bride, mais par exemple au milieu de l'isolateur lorsque la rigidité de ce dernier est suffisante pour résister aux efforts imposés.

## Revendications

1. Installation blindée, notamment poste blindé à haute tension, comprenant un conducteur (10) logé à l'intérieur d'une enveloppe (12) métallique contenant un gaz isolant et formée d'au moins un tronçon raccordé à un tronçon adjacent par une paire de brides (22, 24), de raccordement à boulons de serrage (26) entre lesquelles est interposée la bordure externe (20) d'un isolateur (18) de support dudit conducteur (10) agencé en cloison étanche de subdivision de ladite enveloppe en compartiments étanches (14, 16), caractérisée en ce qu'un évidement (32, 34) est ménagé dans la bordure (20) ou dans l'interface entre la bordure (20) et l'une des brides (22, 24) au droit des boulons de serrage (26), ledit évidement étant agencé pour recevoir, après enlèvement du boulon, une plaquette (38) formant écrou dans laquelle peut être vissée une vis de fixation (40) de la bordure (20) à l'autre desdites brides.

2. Installation blindée selon la revendication 1, caractérisée en ce que des évidements (32, 34) sont ménagés dans les deux interfaces pour solidariser la bordure (20) de l'isolateur à l'une quelconque des brides (22, 24) de ladite paire de brides.

3. Installation blindée selon la revendication 2, caractérisée en ce que ledit évidement (32, 34) est ménagé dans la bordure (20) de l'isolateur.

4. Installation blindée selon la revendication 2, caractérisée en ce que ledit évidement (32, 34) est ménagé dans la bride (22, 24).

5. Installation blindée selon la revendication 1, caractérisée en ce que ledit évidement est ménagé au milieu de la bordure (20) externe.

6. Installation blindée selon l'une quelconque des revendications précédentes, caractérisée en ce que ledit évidement (32, 34) s'étend en forme de demi-lune autour dudit boulon (26), ladite plaquette (38) ayant une forme conjuguée de répartition de la pression de serrage.

7. Installation blindée selon l'une quelconque des revendications précédentes, caractérisée en ce qu'un évidement (32, 34) est ménagé autour de chaque boulon (26).

## Patentansprüche

1. Gekapselte Schaltanlage, insbesondere gekapselte Hochspannungs-Schaltanlage, mit einem Leiter (10), der im Innern eines metallischen Gehaeuses (12) untergebracht ist, welches ein Isoliergas enthaelt und aus mindestens einem Stueck besteht, das mit einem danebenliegenden Stueck durch ein Paar mit Druckschrauben versehene Anschlussflansche (22, 24) verbunden ist, zwischen denen der Aussenrand (20) eines Stuetzisolators (18) des genannten Leiters (10) eingefuegt ist als dicht Unterteilungswand des genannten Gehaeuses in dichte Abteilungen (14, 16), dadurch gekennzeichnet, dass in dem Aussenrand (20) oder in der Zwischenflaeche zwischen dem Rand (20) und einem der Flansche (22, 24) auf der Hoehe der Druckschrauben (26), eine Aushoehlung vorgesehen ist, die so ausgebildet ist, um nach Abnehmen der Schraube eine eine Mutter bildende Platte (38) aufzunehmen, in die eine Befestigungsschraube (40) des Randes (20) mit dem anderen der genannten Flansche geschraubt werden kann.

2. Gekapselte Schaltanlage nach Anspruch 1, dadurch gekennzeichnet, dass Aushoehlungen (32, 34) in den beiden Zwischenflaechen angeordnet sind, um den Rand (20) des Isolators mit irgendeinem Flansch (22, 24) des genannten Flanschenpaares zu verbinden.

3. Gekapselte Schaltanlage gemaess Anspruch 2, dadurch gekennzeichnet, dass die genannte Aushoehlung (32, 34) im Rand (20) des Isolators angeordnet ist.

4. Gekapselte Schaltanlage gemaess Anspruch 2, dadurch gekennzeichnet, dass die genannte Ashoehlung (32, 34) in dem Flansch (22, 24) angeordnet ist.

5. Gekapselte Schaltanlage gemaess Anspruch 1, dadurch gekennzeichnet, dass die genannte Aushoehlung in der Mitte des Aussenrandes (20) angeordnet ist.

6. Gekapselte Schaltanlage gemaess einem der vorhergehenden Ansprueche, dadurch gekennzeichnet, dass sich die genannte Aushoehlung (32, 34) halbmondfoermig um die genannte Schraube (26) erstreckt, wobei die genannte Platte (38) eine Form besitzt zur Verteilung des Schraubdruckes.

7. Gekapselte Schaltanlage gemaess irgendeinem der vorhergehenden Ansprueche, dadurch gekennzeichnet, dass um jede Schraube (26) eine Aushoehlung (32, 34) angebracht ist.

**Claims**

1. Metal-clad installation, in particular high tension metal-clad substation, comprising a conductor (10) placed inside a metallic housing (12) containing an insulating gas and formed at least by one section connected to an adjacent section by a pair of connected flanges (22, 24) with tightening bolts (26) between which is interposed the external border (20) of a supporting insulator (18) of said conductor (10) disposed in tight subdivision partition of said housing into tight compartments (14, 16) characterized in that near the tightening bolts (26) and in the interface between one of the flanges (22, 24) and the external border (20) or in the border (20) is accommodated a slot (32, 34) capable of reveiving after removing the bolt (26) a small plate (38) forming nut in which a screw (40) to fix the border (20) to the other of said flanges can be screwed.

2. Metal-clad installation according to claim 1, characterized in that slots (32, 34) are accommodated in the two interfaces to secure the insulator border (20) to any of the flanges (22, 24) of said pair of flanges.

3. Metal-clad installation according to claim 2, characterized in that said slot (32, 34) is accommodated in the insulator border (20).

4. Metal-clad installation according to claim 2, characterized in that said slot (32, 34) is accommodated in the flange (22, 24).

5. Metal-clad installation according to claim 1, characterized in that said slot is accommodated in the middle of the border (20) thickness.

6. Metal-clad installation according to any of the former claims, characterized in that said slot (32, 34) extends in the form of half crescent around said bolt (26), said small plate (38) having a conjugated form of distribution the tightening pressure.

7. Metal-clad installation according to any of the former claims, characterized in that a slot (32, 34) is accommodated around each bolt (26).

Fig . 1

Fig . 3

Fig . 4